(19) Europäisches Patentamt
European Patent Office
Office européen des brevets

(11) **EP 2 359 202 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **09751801.3**

(22) Anmeldetag: **02.11.2009**

(51) Int Cl.:
**G05B 19/408** *(2006.01)* **G05B 19/423** *(2006.01)*

(86) Internationale Anmeldenummer:
**PCT/EP2009/007839**

(87) Internationale Veröffentlichungsnummer:
**WO 2010/075906 (08.07.2010 Gazette 2010/27)**

(54) **VERFAHREN UND VORRICHTUNG ZUR AUSWAHL EINER GESPEICHERTEN POSITION EINES ARBEITSPUNKTES EINES MANIPULATORS**

METHOD AND DEVICE FOR SELECTING A STORED POSITION OF A WORKING POINT OF A MANIPULATOR

PROCÉDÉ ET DISPOSITIF DE SÉLECTION D'UNE POSITION MÉMORISÉE D'UN POINT DE TRAVAIL D'UN MANIPULATEUR

(84) Benannte Vertragsstaaten:
**AT BE BG CH CY CZ DK EE ES FI FR GB GR HR HU IE IS IT LI LT LU LV MC MK MT NL NO PL PT RO SE SI SK SM TR**

(30) Priorität: **17.12.2008 DE 102008062623**

(43) Veröffentlichungstag der Anmeldung:
**24.08.2011 Patentblatt 2011/34**

(73) Patentinhaber: **KUKA Deutschland GmbH**
**86165 Augsburg (DE)**

(72) Erfinder:
• **HIETMANN, Gerhard**
**86405 Herbertshofen (DE)**

• **SEDLMAYR, Andreas**
**82256 Fürstenfeldbruck (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**WO-A1-01/30545          WO-A1-03/099526**
**WO-A1-2007/071736     DE-A1- 10 048 952**
**DE-A1- 19 626 459        DE-C1- 19 653 830**
**DE-C1- 19 653 830        FR-A1- 2 737 024**
**US-A1- 2006 074 514     US-A1- 2007 179 644**
**US-B1- 6 385 508**

**Beschreibung**

Die vorliegende Erfindung betrifft ein Verfahren und eine Vorrichtung zur Auswahl einer gespeicherten Position eines Arbeitspunktes eines Manipulators, insbesondere eines Roboters, aus einer Gruppe von gespeicherten Positionen, mittels der Erfassung einer aktuellen Raumposition eines Referenzpunktes.

Eine Arbeitsbahn eines Manipulators kann auf verschiedene Weisen vorgegeben werden. So können beispielsweise einzelne Arbeitspunkte, etwa durch Eingaben über eine 6D- oder Space-Maus, einen Joystick, Verfahrtasten oder dergleichen, mit einer Werkzeugspitze motorisch angefahren oder das Werkzeug durch manuelle Bewegung an die Arbeitspunkte geführt werden, etwa durch Anfassen des Werkzeuges, des Manipulators oder eines mit diesem verbundenen Handgriff, wie dies die US 6,385,508 B1 beschreibt. Die Positionen dieser Arbeitspunkte werden dann abgespeichert, i.e. der Manipulator wird geteacht.

Führt der Manipulator ein entsprechendes Programm aus, fährt er gespeicherte Arbeitspunkte in einer Reihenfolge und auf interpolierenden Bahnabschnitten ab, die durch das Programm vorgegeben sind. In üblichen Industrieroboterprogrammen können beispielsweise abgespeicherte Arbeitspunkte durch sogenannte Punkt-zu-Punkt-("PTP")-Bahnabschnitte, lineare Bahnabschnitte ("LIN") oder kreissegmentförmige Bahnabschnitte ("CIR") verbunden werden. Zusätzlich können Positionen bestimmte Parameter zugeordnet werden, beispielsweise Prozessparameter wie Beginn bzw. Ende eines Farbauftrages, Energie- und Materialzufuhr einer Schweißbahn oder dergleichen.

Durch gezielte Anwahl und isoliertes Anfahren einer abgespeicherten Position oder durch schrittweises Ausführen des Programms mit dem Manipulator können einzelne Positionen bzw. ihnen zugeordnete Parameter überprüft und gegebenenfalls korrigiert werden, indem Positionen oder Parameterwerte verändert, neue Arbeitspunkte eingefügt oder gespeicherte Arbeitspunkte gelöscht werden.

Neben diesem Teachen mit dem Manipulator selber sind jedoch noch weitere Verfahren bekannt. So kann beispielsweise eine Arbeitsbahn offline programmiert werden. Gleichermaßen ist es möglich, Arbeitspunkte anstelle des Manipulators mit einem Handgerät, dessen Position von einer Trackingeinrichtung erfasst wird, zu teachen, wie dies die DE 100 48 952 A1 und die WO 01/30545 A1 beschreiben. Ohne Manipulator kann ein solcherart erstelltes Programm nicht vor Ort überprüft werden. Insbesondere ist es nicht möglich, einer abgespeicherten Position eine tatsächliche Position im Arbeitsraum, beispielsweise in einer Bearbeitungszelle, zuzuordnen. Doch auch bei mittels Manipulator geteachten Arbeitspunkten oder vorhandenem Manipulator ist die Zuordnung einer abstrakten gespeicherten Position zu einer tatsächliche Position im Arbeitsraum, die angefahren werden soll, aufwändig, insbesondere, wenn die Positionen in einem wenig intuitiven Koordinatensystem, beispielsweise als Satz von Gelenkkoordinaten des Manipulators abgespeichert sind. Ein aus der WO 2003/099526 A1 bekanntes Verfahren zur Programmierung eines Industrieroboters, bei dem eine Bahn mit einer Anzahl von Wegpunkten programmiert wird, die sich auf oder in der Nähe eines Objekts befinden, das vom Roboter bearbeitet werden soll, umfasst: Erhalten eines Bildes des Objekts, Erhalten von Informationen über die Position eines Zeigeglieds, das auf Punkte auf oder in der Nähe des Objekts zeigt, und Bestimmen der Position der Punkte in Bezug auf das Objekt. Auf der Basis der erhaltenen Information wird ein Objekt gespeichert, wobei der gegenwärtig als Wegpunkt angezeigte Punkt beim Empfang eines Aufzeichnungssignals gespeichert wird.

Die WO 2007/071736 A1 betrifft ein Verfahren zur Ermittlung einer Trajektorie für eine Robotervorrichtung, wobei innerhalb des Arbeitsbereichs der Robotervorrichtung ein Werkstück mit mindestens einer zu bearbeitenden Oberfläche und ein Zeigermechanismus an mehreren Stützpunkten auf der zu bearbeitenden Oberfläche angeordnet ist. Die Koordinaten der Stützpunkte werden durch Erfassen der zugehörigen Koordinaten des Zeigermechanismus definiert. Eine Interpolation erfolgt automatisch zwischen zwei jeweils benachbarten Stützpunkten, um eine Trajektorie zu definieren, die Trajektorie auf die zu bearbeitende Fläche projiziert wird.

DE 196 53 830 C1 beschreibt ebenfalls relevanten Stand der Technik.

Aufgabe der vorliegenden Erfindung ist es daher, die Prüfung und Korrektur gespeicherter Programme zu verbessern.

Diese Aufgabe wird durch ein Verfahren mit den Merkmalen des Anspruchs 1 bzw. eine Vorrichtung mit den Merkmalen des Anspruchs 12 gelöst. Ansprüche 13, 14 stellen ein entsprechendes Computerprogramm bzw. Computerprogrammprodukt, insbesondere ein Speichermedium oder einen Datenträger, unter Schutz, die Unteransprüche betreffen vorteilhafte Weiterbildungen.

Erfindungsgemäß wird vorgeschlagen, zunächst eine aktuelle Raumposition eines Referenzpunktes zu erfassen. Als Position eines Punktes wird vorliegend die Lage des Punktes, insbesondere seine Abstandskomponenten vom Ursprung eines Bezugskoordinatensystems wie einem Welt-, Manipulator-, Basis oder Werkzeugsystem, und/oder die Orientierung eines punktfesten Referenzkoordinatensystems gegenüber einem derartigen Bezugskoordinatensystem bezeichnet, beispielsweise seine EULER- oder KARDAN-Winkel. Die aktuelle Raumposition, also die Lage und/oder Orientierung eines Referenzpunktes bzw. Referenzpunktkoordinatensystems kann beispielsweise in kartesischen, Zylinder- oder Kugelkoordinaten des Bezugskoordinatensystems, oder in Gelenkkoordinaten bzw. -stellungen eines Manipulators erfasst werden.

Insbesondere kann eine aktuelle Raumposition des Referenzpunktes auf Basis einer Position eines Handgerätes erfasst werden, die hierzu beispielsweise mittels einer aktiven oder passiven, insbesondere optischen, Trackingeinrichtung erfasst werden kann. Sind die Position des, vorzugsweise handgerätfesten, Referenzpunktes relativ zum Handgerät und die erfasste Position des Handgerätes relativ zum Bezugskoordinatensystem bekannt, kann hieraus die Position des Referenzpunktes relativ zum Bezugskoordinatensystem, beispielsweise in kartesischen Koordinaten des Arbeitsraumes oder in Gelenkkoordinaten eines Manipulators erfasst und hierzu gegebenenfalls durch Lösen der Vorwärts- bzw. Rückwärtskinematik umgerechnet werden. Alternativ kann der Referenzpunkt auch manipulatorgeführt sein, beispielsweise als Tool Center Point ("TCP") eines motorisch verfahrenen oder manuell bewegten Manipulators. In diesem Fall kann die aktuelle Raumposition des Referenzpunktes ebenfalls mittels einer externen Trackingeinrichtung oder auf Basis der Gelenkstellungen des Manipulators erfasst werden, beispielsweise der Achswinkel eines Knickarmroboters.

In einer bevorzugten Ausführung weist das Handgerät ein Werkzeug auf, dessen Außenkontur im Wesentlichen einem Werkzeug des Manipulators, beispielsweise einem Greifer, einer Schweißzange, einem Bohr- oder Fräskopf oder dergleichen entspricht. Dann kann als Referenzpunkt ein werkzeugfester Referenzpunkt, insbesondere ein Kontaktpunkt zu einem Werkstück oder der TCP gewählt werden.

Ist nun die aktuelle Raumposition des Referenzpunktes, beispielsweise eines handgerätefesten TCPs, erfasst, werden Differenzen zwischen dieser erfassten Raumposition und gespeicherten Positionen von Arbeitspunkten aus einer Gruppe von gespeicherten Positionen bestimmt.

Die Positionen der Arbeitspunkte, die insbesondere Soll-Positionen eines werkzeugfesten Referenzpunktes entsprechen können, werden vorab beispielsweise durch entsprechendes Positionieren des Handgerätes und Erfassen seiner Position durch eine Trackingeinrichtung, durch motorisches Anfahren der Arbeitspunkte mit einem Manipulator, durch manuelles Führen eines manipulatorfesten Referenzpunktes in die Arbeitspunkte und/oder durch eine offline-Programmierung gespeichert. Vorzugsweise definiert die Gruppe gespeicherter Positionen eine Soll-Arbeitsbahn des Manipulators in Form eines Programms für die Steuerung des Manipulators.

Als Differenz wird insbesondere ein kartesischer Abstand zwischen erfasster Raumposition und gespeicherter Position bezeichnet. Gleichermaßen kann jedoch auch eine beliebige Norm, beispielsweise eine, gegebenenfalls gewichtete, Betrags-, Minimal-, Maximal- oder Mittelnorm wenigstens eines Teiles eines Differenzvektors zwischen einem Vektor, der die erfasste Raumposition beschreibt, und einem Vektor, der die gespeicherte Position beschreibt, eine Differenz im Sinne der vorliegenden Erfindung darstellen, wobei vorteilhafterweise vor der Differenzbildung erfasste Raumposition und gespeicherte Position in das gleiche Bezugssystem transformiert werden. Wird beispielsweise eine Position eines Punktes Pi durch seine kartesischen Koordinaten $x_{Pi}$, $y_{Pi}$, $z_{Pi}$ in einem Bezugskoordinatensystem und die KARDAN-Winkel $\alpha_{Pi}$, $\beta_{Pi}$, $\gamma_{Pi}$ eines punktfesten Koordinatensystems gegen das Bezugskoordinatensystem definiert, so kann als Differenz $a_{P1P2}$ zwischen den Punkten P1 und P2 zum Beispiel der kartesische Abstand

$$a_{P1P2} = \sqrt{[(x_{P1} - x_{P2})^2 + (y_{P1} - y_{P2})^2 + (z_{P1} - z_{P2})^2]}\ (1),$$

eine mit den Faktoren A, B, C gewichtete Betragsnorm

$$a_{P1P2} = \sqrt{[(x_{P1} - x_{P2})^2 + (y_{P1} - y_{P2})^2 + (z_{P1} - z_{P2})^2 + A \times (\alpha_{P1} - \alpha_{P2})^2 + B \times (\beta_{P1}}$$
$$\overline{- \beta_{P2})^2 + C \times (\gamma_{P1} - \gamma_{P2})^2]}\ (2),$$

oder das Minimum, Maximum bzw. geometrische oder Mittel aus {$|x_{P1} - x_{P2}|$, $|y_{P1} - y_{P2}|$, $|z_{P1} - z_{P2}|$, $|\alpha_{P1} - \alpha_{P2}|$, $|\beta_{P1} - \beta_{P2}|$, $|\gamma_{P1} - \gamma_{P2}|$} sein.

Nun werden eine oder mehrere derjenigen gespeicherten Positionen ausgewählt, deren Differenz zu der erfassten Raumposition kleiner oder gleich einem vorgegebenen Grenzwert ist. Insbesondere kann diejenige gespeicherte Position ausgewählt werden, deren Differenz zu der erfassten Raumposition minimal ist. In diesem Fall wird also derjenige der gespeicherten Arbeitspunkte ausgewählt, der dem Referenzpunkt am nächsten ist.

Führt der Anwender beispielsweise ein Handgerät mit handgerätfestem Referenzpunkt, insbesondere ein Handgerät mit einem Dummy-Werkzeug, dessen TCP den Referenzpunkt definiert, und aktiviert die erfindungsgemäße Vorrichtung, so findet diese in der Gruppe gespeicherter Arbeitspunkte, die beispielsweise in einem Steuerprogramm zum Abfahren einer Arbeitsbahn durch den Manipulator verwendet werden, denjenigen Arbeitspunkt, der der aktuellen Position des Referenzpunktes am Werkzeug des Handgerätes am nächsten liegt. Dies ermöglicht die wechselseitige Zuordnung von gespeicherten Positionen und tatsächlichen Raumpositionen.

So kann beispielsweise der Benutzer das Werkzeug des Handgerätes in eine gewünschte Position bringen und durch die erfindungsgemäße Vorrichtung diejenige abgespeicherte Position in einem Manipulatorprogramm feststellen, die dieser gewünschten Position entspricht. Diese gespeicherte Position kann er dann auswählen und gegebenenfalls modifizieren, indem er beispielsweise dieser Position zugeordnete Parameter ändert, die Position löscht, oder durch Verschieben des Handgerätes und Erfassen der neuen Raumposition die ausgewählte gespeicherte Position in die neue Raumposition ändert oder die neue Raumposition als zusätzliche Position für das Manipulatorprogramm abspeichert.

Umgekehrt kann der Benutzer auch eine gespeicherte Position im Raum auffinden, indem er die Raumposition des Referenzpunktes, beispielsweise des Werkzeugs des Handgerätes, solange verändert, bis die Differenz zwischen der, insbesondere dann vorzugsweise kontinuierlich oder periodisch erfassten, Raumposition und der gesuchten gespeicherten Position aus der Gruppe kleiner oder gleich einem vorgegebenen Grenzwert ist, insbesondere im Wesentlichen gleich Null wird. Wie bei einer Lawinensuche mit einem Lawinenverschüttetensuchgerät kann der Benutzer so einer gespeicherten Position eines Manipulatorprogramms eine tatsächliche Raumposition zuordnen.

Die Gruppe von gespeicherten Positionen kann alle für ein Manipulatorprogramm gespeicherten Arbeitspunkte, insbesondere alle geteachten Positionen, oder nur einen Teil dieser Menge umfassen, wobei in einer bevorzugten Ausführung der Benutzer diejenigen gespeicherten Positionen vorgeben kann, die als Bestandteil der Gruppe auswählbar sind, um so gezielt aus verhältnismäßig wenigen gespeicherten Arbeitspunkten auszuwählen.

Es können auch mehrere, insbesondere alle gespeicherte Positionen ausgewählt werden, deren Differenz zu der erfassten Raumposition kleiner oder gleich einem vorgegebenen Grenzwert ist. Auf diese Weise kann der Benutzer beispielsweise feststellen, welche Arbeitspunkte in einem bestimmten Bereich gespeichert sind, und so fehlende Bahnsegmente erkennen. Insbesondere hierzu kann es vorteilhaft sein, dass der Grenzwert einstellbar ist, um den Radius, in dem gespeicherte Arbeitspunkte noch ausgewählt werden, variabel festlegen zu können. Gleichermaßen kann der Grenzwert jedoch auch fest vorgegeben sein. Er ist in diesem Fall vorzugsweise so gewählt, dass stets nur höchstens ein nächstliegender Arbeitspunkt ausgewählt wird, indem beispielsweise der Grenzwert kleiner als die Hälfte des Minimums der Abstände zwischen allen gespeicherten Arbeitspunkten aus der Gruppe gewählt wird.

Umgekehrt kann vorzugsweise dann, wenn keine Differenz den Grenzwert unterschreitet, eine Meldung ausgegeben werden, die anzeigt, dass keine der aktuellen Raumposition entsprechende Position eines Arbeitspunktes gespeichert ist, so dass insbesondere ein fehlender, i.e. nicht gespeicherter Arbeitspunkt erkannt werden kann.

Besonderes bevorzugt werden eine oder mehrere, vorzugsweise alle ausgewählten Positionen angezeigt. Dies kann beispielsweise durch Hervorhebung oder sonstige Markierung der entsprechenden Positionen in einem graphisch dargestellten Manipulatorprogramm erfolgen, vorzugsweise auf einer Anzeige eines Handgerätes, welches zugleich die Raumposition des Referenzpunktes bestimmt.

Zusätzlich oder alternativ kann die Differenz zwischen der erfassten Raumposition und einer oder mehreren, vorzugsweise allen ausgewählten Positionen, insbesondere der angezeigten Positionen, angezeigt werden. Hierdurch wird insbesondere das Auffinden einer gespeicherten Position im Raum erleichtert, indem der Benutzer eine Information erhält, wie weit die erfasste Raumposition, beispielsweise das Handgerät, noch von einer oder mehreren gesuchten gespeicherten Positionen entfernt ist. Werden mehrere ausgewählte Positionen angezeigt, können die Differenzen zu diesen gespeicherten Positionen angezeigt werden, um die Orientierung des Benutzers zu erleichtern und ihm einen Hinweis zu geben, in welcher Richtung relativ zu den gespeicherten Arbeitspunkten er den Referenzpunkt bewegt.

Die angezeigte Differenz ist vorzugsweise mit der Differenz, die zur Auswahl der gespeicherten Positionen bestimmt wird, identisch und kann insbesondere dem kartesischen Abstand entsprechen. Gleichermaßen kann jedoch auch beispielsweise nur der kartesische Abstand angezeigt werden, während in die Differenz zur Auswahl der gespeicherten Positionen auch die Orientierungswinkel eingehen, oder es können umgekehrt kartesischer Abstand und Winkelabweichungen zwischen einem Referenzpunktkoordinatensystem und dem gespeicherten Arbeitspunktsystem angezeigt werden, während in die Differenz zur Auswahl der gespeicherten Positionen nur der kartesische Abstand eingeht.

Zusätzlich oder alternativ zu dem bzw. den ausgewählten Arbeitspunkten und/oder der Differenz können ein oder mehrere Parameter angezeigt werden, die einer der ausgewählten Positionen der Gruppe, insbesondere einer angezeigten Position zugeordnet sind, insbesondere Prozessparameter wie Aktivierung oder Deaktivierung eines Werkzeuges, Öffnungsstellungen eines Greifers oder dergleichen.

In einer bevorzugten Ausführung der vorliegenden Erfindung kann zusätzlich oder alternativ zu ausgewählten gespeicherten Punkten auch die Raumposition des Referenzpunktes angezeigt werden, um dem Benutzer die Anwendung zu erleichtern. Insbesondere kann die Raumposition des Referenzpunktes in einer virtuellen Realität ("VR") dargestellt werden, in der bevorzugt auch wenigstens die ausgewählten von den gespeicherten Punkten dargestellt sind. Gleichermaßen können die Raumposition des Referenzpunktes und/oder wenigstens die ausgewählten von den gespeicherten Punkten in einer Projektion auf eine Projektionsebene dargestellt werden, die vorzugsweise durch die Orientierung eines Handgerätes vorgegeben ist.

Weitere Vorteile und Merkmale ergeben sich aus den Unteransprüchen und den Ausführungsbeispielen. Hierzu zeigt, teilweise schematisiert:

Fig. 1: einen Roboter, ein Werkstück und eine Vorrichtung nach einer Ausführung der vorliegenden Erfindung;

Fig. 2:     ein Handgerät der Vorrichtung nach Fig. 1;

Fig. 3:     einen Ausschnitt einer Anzeige des Handgerätes nach Fig. 2;

Fig. 4:     einen Teil einer gespeicherten Arbeitsbahn des Roboters nach Fig. 1; und

Fig. 5:     die Position des Handgerätes nach Fig. 2 in einem Bezugskoordinatensystem.

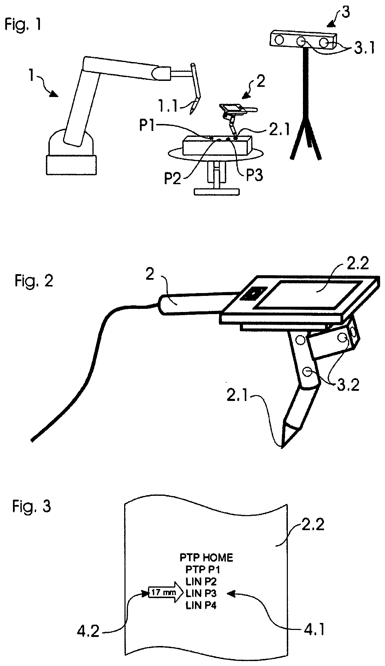

Fig. 1 zeigt einen sechsachsigen Knickarmroboter 1 mit einem Schweißwerkzeug 1.1 sowie ein Werkstück, auf dem mehrere Arbeitspunkte P1, P2, P3,... angeordnet sind. Es soll ein Programm erstellt und kontrolliert werden, nach dem der Roboter 1 nacheinander mit der Spitze seines Schweißwerkzeuges 1.1 die einzelnen Arbeitspunkte P1, P2, P3,... anfährt, um dort Schweißpunkte zu setzen.

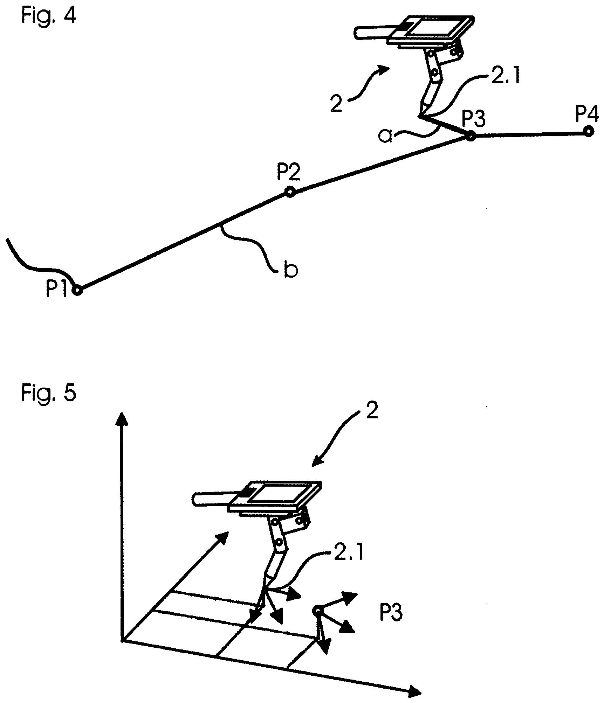

Hierzu ist ein Handgerät 2 vorgesehen, das ein funktionsloses Dummy-Werkzeug aufweist, dessen Kontur dem Schweißwerkzeug 1.1 entspricht. Die Position, i.e. Lage und Orientierung des Handgerätes 2 relativ zu einem Bezugskoordinatensystem des Roboters 1, das in Fig. 5 schematisch angedeutet und beispielsweise ortsfest in dem Grundgestell des Roboters 1 definiert sein kann, wird über eine Trackingeinrichtung 3 erfasst, deren Meßsystem 3.1 die Lagen von Markern 3.2 erfasst, welche an dem Dummy-Werkzeug angeordnet sind (vgl. Fig. 2).

Als Referenzpunkt des Werkzeuges ist seine Werkzeugspitze 2.1 definiert, die die einzelnen Arbeitspunkte P1, P2, P3,... auf dem Werkstück anfahren soll. Da die Position, i.e. Lage und Orientierung eines werkzeugfesten Referenzkoordinatensystem, welches in Fig. 5 eingezeichnet ist, relativ zu den Markern bekannt ist und deren Lage relativ zu dem Bezugskoordinatensystem, in dem Soll-Positionen für das Roboterprogramm abgespeichert werden, durch die Trackingeinrichtung 3 erfasst wird, können die Positionen der gewünschten Arbeitspunkte P1, P2, P3,... auf dem Werkstück erfasst und abgespeichert, i.e. geteacht werden, indem der Benutzer die Werkzeugspitze 2.1 des Dummy-Werkzeugs des Handgerätes 2 nacheinander in die einzelnen Arbeitspunkte führt und durch eine Eingabe, beispielsweise über einen Touch-Screen des Handgerätes 2, die jeweilige Position abspeichert.

Sind die Positionen der Arbeitspunkte P1, P2, P3,... gespeichert, kann hieraus durch Vorgabe einer Reihenfolge und der gewünschten Bahnsegmente ein Roboterprogramm erstellt werden. Eine entsprechende Programmsequenz 4.1, wie sie auf einer Anzeige 2.2 des Handgerätes 2 dargestellt wird, ist exemplarisch in Fig. 3 gezeigt: Danach fährt der Roboter 1 zunächst auf einer PTP-Bahn seine Grundpose an ("PTP HOME"), anschließend von dort auf einer PTP-Bahn zum ersten Arbeitspunkt P1 ("PTP P1"), und dann sukzessive mit Linearbewegungen zu den weiteren Arbeitspunkten P2, P3 und P4 ("LIN P2", "LIN P3", LIN P4"). In dem Programm sind zudem Prozessparameter, insbesondere eine Verweilzeit an der jeweiligen Position, eine Aktivierung und zeitlich in einem vorgegebenen Abstand eine Deaktivierung des Schweißwerkzeuges und dergleichen gespeichert (nicht dargestellt).

Die sich bei Abarbeitung dieses Programms ergebende Arbeitsbahn b im kartesischen Arbeitsraum ist exemplarisch in Fig. 4 gezeigt, in der der Arbeitspunkt P1 mit einer PTP-Bahn angefahren wird, die restlichen Punkte P2 bis P4 mit Linearbewegungen. Obwohl nicht dargestellt, kann eine Robotersteuerung die Positionen der Arbeitspunkte P1, P2,... und des Referenzpunktes 2.1, i.e. ihre in Fig. 5 gezeigten x-, y- und z-Komponenten sowie die Winkel punktfester Koordinatensysteme zu dem Bezugskoordinatensystem durch Lösen der Rückwärtskinematik in Gelenkstellungen des Roboters 1 transformieren, auf deren Grundlage dessen Antriebe angesteuert werden.

Will nun der Benutzer die programmierte Arbeitsbahn b modifizieren, ohne sie durch den Roboter 1 abzufahren, kann er die erfindungsgemäße Vorrichtung, die im Wesentlichen in dem Handgerät 2 und/oder einem damit verbundenen Rechner (nicht dargestellt) integriert ist, aktivieren. Dadurch wird quasi-kontinuierlich oder bei Betätigen eines Schalters durch den Benutzer die aktuelle Raumposition des handgerätfesten Referenzpunktes 2.1 an der Spitze des Dummy-Werkzeuges durch die Trackingeinrichtung 3 erfasst. Anschließend werden die kartesischen Abstände zwischen der erfassten aktuellen Raumposition und den gespeicherten Positionen der Arbeitspunkte der Programmsequenz 4.1 als Differenzen der Lagen von Referenz- und Arbeitspunkt bestimmt. In Fig. 4 ist hierzu exemplarisch der kartesische Abstand a zwischen dem Referenzpunkt 2.1 und dem Arbeitspunkt P3 eingezeichnet, welcher im Ausführungsbeispiel aktuell 17 mm beträgt, wenn das Handgerät 2 sich in der in den Figuren 4, 5 gezeigten Position befindet.

Man erkennt aus Fig. 4, dass der Referenzpunkt 2.1 dem Arbeitspunkt P3 am nächsten liegt. Daher wird in der Anzeige 2.2 des Handgerätes 2 die entsprechende gespeicherte Position angezeigt, indem die Programmzeile der Sequenz 4.1, in der diese Position angesprochen wird, durch einen Pfeil 4.2 markiert wird. Natürlich sind auch andere Markierungen, beispielsweise eine Änderung der Schrift und/oder der Hintergrundfarbe der entsprechenden Programmzeile möglich. Zusätzlich wird in dem Pfeil 4.2 der Abstand a zwischen dem Referenzpunkt 2.1 und dem Arbeitspunkt P3 angezeigt ("17 mm").

Der Benutzer kann auf diese Weise das Programm kontrollieren und gegebenenfalls modifizieren. Beispielsweise kann er den gespeicherten Arbeitspunkt P3 löschen oder vorher einen weiteren Arbeitspunkt, dessen Position der aktuellen Raumposition des Referenzpunktes 2.1 entspricht, einfügen. Dabei kann er gleichermaßen bewusst einen gespeicherten Punkt des Programms im Arbeitsraum suchen, indem er das Handgerät 2 mit dem Referenzpunkt 2.1 solange im Arbeitsraum bewegt, bis der auf der Anzeige 2.2 angezeigte Abstand a zu dem gesuchten gespeicherten Punkt im Wesentlichen gleich Null ist. Umgekehrt kann er beispielsweise eine Ecke des Werkstückes mit dem Referenzpunkt 2.1 berühren und durch die erfindungsgemäße Vorrichtung feststellen, dass hierfür kein Schweißpunkt programmiert wurde, da keine gespeicherte Position mit einem Abstand von im Wesentlichen Null vorhanden ist.

Bezugszeichenliste

1        Roboter
1.1      Werkzeug
2        Handgerät
2.1      Referenzpunkt (Dummy-Werkzeugspitze)
2.2      Anzeige
3        Trackingeinrichtung
3.1      Meßsystem
3.2      Marker
4.1      Programmsequenz
4.2      Markierungspfeil mit Abstandsanzeige

a          Abstand
b          Arbeitsbahn
P1,...P4   Arbeitspunkt

**Patentansprüche**

1. Verfahren zur Auswahl einer gespeicherten Position eines Arbeitspunktes (P3) eines Manipulators, insbesondere eines Roboters (1), aus einer Gruppe von gespeicherten Positionen, mit den Schritten:

   Erfassen einer aktuellen Raumposition eines Referenzpunktes (2.1); und
   Bestimmen von Differenzen (a) zwischen der erfassten Raumposition und gespeicherten Positionen der Arbeitspunkte der Gruppe; **gekennzeichnet durch** die Schritte:

   Auswahl wenigstens einer derjenigen gespeicherten Positionen, deren Differenz zu der erfassten Raumposition kleiner oder gleich einem vorgegebenen Grenzwert ist; und
   Anzeigen wenigstens einer der ausgewählten Positionen durch Markierung der Programmzeile, in der diese Position angesprochen wird, in einem graphisch dargestellten Manipulatorprogramm.

2. Verfahren nach Anspruch 1, **dadurch gekennzeichnet, dass** die Gruppe gespeicherter Positionen eine Arbeitsbahn (b) des Manipulators definiert.

3. Verfahren nach einem der vorhergehenden Ansprüche, **dadurch gekennzeichnet, dass** die aktuelle Raumposition des Referenzpunktes (2.1) auf Basis einer Position eines Handgerätes (2) erfasst wird.

4. Verfahren nach Anspruch 3, **dadurch gekennzeichnet, dass** die Position des Handgerätes mittels einer Trackingeinrichtung (3) erfasst wird.

5. Verfahren nach einem der vorhergehenden Ansprüche, **dadurch gekennzeichnet, dass** der Grenzwert fest oder einstellbar ist.

6. Verfahren nach einem der vorhergehenden Ansprüche, **dadurch gekennzeichnet, dass** die gespeicherte Position ausgewählt wird, deren Differenz (a) zu der erfassten Raumposition minimal ist.

7. Verfahren nach einem der vorhergehenden Ansprüche 1 bis 5, **dadurch gekennzeichnet, dass** mehrere, insbesondere alle gespeicherte Positionen ausgewählt werden, deren Differenz zu der erfassten Raumposition kleiner oder gleich einem vorgegebenen Grenzwert ist.

8. Verfahren nach einem der vorhergehenden Ansprüche, **dadurch gekennzeichnet, dass** die Differenz (a) zwischen der erfassten Raumposition und wenigstens einer angezeigten Position angezeigt wird.

9. Verfahren nach einem der vorhergehenden Ansprüche, **dadurch gekennzeichnet, dass** wenigstens ein Parameter angezeigt wird, der einer der ausgewählten Positionen der Gruppe, insbesondere einer angezeigten Position zugeordnet ist.

10. Verfahren nach einem der vorhergehenden Ansprüche, **dadurch gekennzeichnet, dass** wenigstens eine der ausgewählten Positionen und/oder ein ihr zugeordneter Parameter verändert wird.

11. Verfahren nach einem der vorhergehenden Ansprüche, **dadurch gekennzeichnet, dass** die Raumposition des Referenzpunktes (2.1) solange verändert wird, bis die Differenz zwischen der erfassten Raumposition und einer vorgegebenen gespeicherten Position aus der Gruppe kleiner oder gleich einem vorgegebenen Grenzwert ist.

12. Vorrichtung zur Auswahl einer gespeicherten Position eines Arbeitspunktes (P3) eines Manipulators, insbesondere eines Roboters (1), aus einer Gruppe von gespeicherten Positionen, mit:

   einer Eingabeeinrichtung (2) zur Eingabe der Gruppe von gespeicherten Positionen;
   einer Erfassungseinrichtung (3) zur Erfassen einer aktuellen Raumposition eines Referenzpunktes (2.1);
   einer Differenzeinrichtung zur Bestimmen von Differenzen (a) zwischen der erfassten Raumposition und gespeicherten Positionen aus der Gruppe; und
   einer Auswahleinrichtung zur Auswahl wenigstens einer der gespeicherten Positionen,
   **dadurch gekennzeichnet, dass**
   die Vorrichtung zur Durchführung eines Verfahrens nach einem der vorhergehenden Ansprüche eingerichtet ist.

13. Computerprogramm, das ein Verfahren nach einem der Ansprüche 1 bis 11 ausführt, wenn es in einer Auswahleinrichtung nach Anspruch 12 abläuft.

14. Computerprogrammprodukt mit Programmcode, der auf einem maschinenlesbaren Träger gespeichert ist und ein Computerprogramm nach Anspruch 13 umfasst.

## Claims

1. A method of selecting a stored position of a working point (P3) of a manipulator, in particular of a robot (1), from a group of stored positions, the method comprising the steps of:

   detecting a current spatial position of a reference point (2.1); and
   determining differences (a) between the detected spatial position and stored positions of the working points of the group;
   **characterised by** the steps of:

   selecting at least one of the stored positions the difference of which from the detected spatial position is less than, or equal to, a predetermined threshold value; and
   displaying at least one of the selected positions by highlighting the program line in which this position is addressed, in a graphically represented manipulator program.

2. The method according to claim 1, **characterised in that** the group of stored positions defines a working path (b) of the manipulator.

3. The method according to any one of the preceding claims, **characterised in that** the current spatial position of the reference point (2.1) is detected on the basis of a position of a device (2) intended to be held by hand.

4. The method according to claim 3, **characterised in that** the position of the device intended to be held by hand is detected by means of a tracking device (3).

5. The method according to any one of the preceding claims, **characterised in that** the threshold value is fixed or adjustable.

6. The method according to any one of the preceding claims, **characterised in that** the stored position is selected, the difference (a) of which to the detected spatial position is minimal.

7. The method according to any one of the preceding claims 1 to 5, **characterised in that** a plurality of the stored positions are selected, in particular that all of the stored positions are selected, the difference of which to the detected spatial position is less than, or equal to, a predetermined threshold value.

8. The method according to any one of the preceding claims, **characterised in that** the difference (a) between the detected spatial position and at least one displayed position is displayed.

9. The method according to any one of the preceding claims, **characterised in that** at least one parameter is displayed which is associated with one of the selected positions of the group, in particular with a displayed position.

10. The method according to any one of the preceding claims, **characterised in that** at least one of the selected positions and / or a parameter associated with it is modified.

11. The method according to any one of the preceding claims, **characterised in that** the spatial position of the reference point (2.1) is changed until the difference between the detected spatial position and a predetermined stored position from the group is less than, or equal to, a predetermined threshold value.

12. A device for selecting a stored position of a working point (P3) of a manipulator, in particular of a robot (1), from a group of stored positions, the device comprising:

> an input device (2) for inputting the group of stored positions;
> a detection device (3) for detecting a current spatial position of a reference point (2.1);
> a difference device for determining differences (a) between the detected spatial position and stored positions from the group; and
> a selection device for selecting at least one of the stored positions,
> **characterised in that**
> the device is arranged to perform a method according to any one of the preceding claims.

13. A computer program which executes a method according to any one of the claims 1 to 11 when it is run on a selection device according to claim 12.

14. A computer program product comprising a program code which is stored on a machine-readable carrier and which comprises a computer program according to claim 13.

**Revendications**

1. Procédé de sélection d'une position mémorisée d'un point de travail (P3) d'un manipulateur, en particulier d'un robot (1), à partir d'un groupe de positions mémorisées, avec les étapes de :

> détection d'une position spatiale actuelle d'un point de référence (2.1) ; et
> détermination de différences (a) entre la position spatiale détectée et les positions mémorisées des points de travail du groupe ;
> **caractérisé par** les étapes de :

> > sélection d'au moins une des positions mémorisées, dont la différence par rapport à la position spatiale détectée est inférieure ou égale à une valeur limite prédéfinie ; et
> > affichage d'au moins une des positions sélectionnées par marquage de la ligne de programme, dans laquelle cette position est mentionnée, dans un programme de manipulateur représenté de manière graphique.

2. Procédé selon la revendication 1, **caractérisé en ce que** le groupe de positions mémorisées définit un trajet de travail (b) du manipulateur.

3. Procédé selon l'une quelconque des revendications précédentes, **caractérisé en ce que** la position spatiale actuelle du point de référence (2.1) est détectée sur la base d'une position d'un appareil portatif (2).

**4.** Procédé selon la revendication 3, **caractérisé en ce que** la position de l'appareil portatif est détectée au moyen d'un dispositif de suivi (3).

**5.** Procédé selon l'une quelconque des revendications précédentes, **caractérisé en ce que** la valeur limite est fixe ou réglable.

**6.** Procédé selon l'une quelconque des revendications précédentes, **caractérisé en ce que** la position mémorisée, dont la différence (a) par rapport à la position spatiale détectée est minimum, est sélectionnée.

**7.** Procédé selon l'une quelconque des revendications précédentes 1 à 5, **caractérisé en ce que** plusieurs, en particulier toutes les positions mémorisées, dont la différence par rapport à la position spatiale détectée est inférieure ou égale à une valeur limite prédéfinie, sont sélectionnées.

**8.** Procédé selon l'une quelconque des revendications précédentes, **caractérisé en ce que** la différence (a) entre la position spatiale détectée et au moins une position affichée est affichée.

**9.** Procédé selon l'une quelconque des revendications précédentes, **caractérisé en ce qu'**au moins un paramètre, qui est associé à une des positions sélectionnées du groupe, en particulier à une position affichée, est affiché.

**10.** Procédé selon l'une quelconque des revendications précédentes, **caractérisé en ce qu'**au moins une des positions sélectionnées et/ou un paramètre qui lui est associé est modifié.

**11.** Procédé selon l'une quelconque des revendications précédentes, **caractérisé en ce que** la position spatiale du point de référence (2.1) est modifiée jusqu'à ce que la différence entre la position spatiale détectée et une position mémorisée prédéfinie du groupe est inférieure ou égale à une valeur limite prédéfinie.

**12.** Dispositif de sélection d'une position mémorisée d'un point de travail (P3) d'un manipulateur, en particulier d'un robot (1), à partir d'un groupe de positions mémorisées, avec :

un dispositif de saisie (2) pour la saisie du groupe de positions mémorisées ;
un dispositif de détection (3) pour la détection d'une position spatiale actuelle d'un point de référence (2.1) ;
un dispositif de différence pour la détermination de différences (a) entre la position spatiale détectée et les positions mémorisées du groupe ; et
un dispositif de sélection pour la sélection d'au moins une des positions mémorisées,
**caractérisé en ce que**
le dispositif est aménagé pour la réalisation d'un procédé selon l'une quelconque des revendications précédentes.

**13.** Programme informatique, qui effectue un procédé selon l'une quelconque des revendications 1 à 11, lorsqu'il se déroule dans un dispositif de sélection selon la revendication 12.

**14.** Produit de programme informatique avec code de programme, qui est mémorisé sur un support lisible par machine et comprend un programme informatique selon la revendication 13.

Fig. 1

Fig. 2

Fig. 3

PTP HOME
PTP P1
LIN P2
17 mm LIN P3
LIN P4

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6385508 B1
- DE 10048952 A1
- WO 0130545 A1
- WO 2003099526 A1
- WO 2007071736 A1
- DE 19653830 C1